# EUROPÄISCHE PATENTSCHRIFT

(11) **EP 3 454 288 B1**
(45) Veröffentlichungstag und Bekanntmachung des Hinweises auf die Patenterteilung: **28.04.2021**
(21) Anmeldenummer: 18190903.7
(22) Anmeldetag: 27.08.2018
(51) Int. Cl.: G06Q 50/06, H04L 9/08

(54) **SCHLÜSSELAUSTAUSCHSYSTEM**
KEY EXCHANGE SYSTEM
SYSTÈME D'ÉCHANGE DE CLÉ

(30) Priorität: 06.09.2017 DE 102017120462
(43) Veröffentlichungstag der Anmeldung: 13.03.2019
(73) Patentinhaber: innogy Innovation GmbH, 45139 Essen (DE)
(72) Erfinder: Stöcker, Carsten, 40724 Hilden (DE)
(74) Vertreter: Cohausz & Florack

(56) Entgegenhaltungen:
- US-A1- 2012 213 371
- Alan Mink ET AL: "Quantum Key Distribution (QKD) and Commodity Security Protocols: Introduction and Integration", International Journal of Network Security & Its Applications (IJNSA), 1. Juli 2009 (2009-07-01), XP055539157, Gefunden im Internet: URL:http://airccse.org/journal/nsa/0709s9. pdf [gefunden am 2019-01-08]
- PEEV M ET AL: "The SECOQC quantum key distribution network in Vienna", NEW JOURNAL OF PHYSICS, INSTITUTE OF PHYSICS PUBLISHING, BRISTOL, GB, Bd. 11, Nr. 7, 1. Juli 2009 (2009-07-01), Seite 75001, XP020161591, ISSN: 1367-2630
- MEHRDAD DIANATI ET AL: "Architecture and protocols of the future European quantum key distribution network", SECURITY AND COMMUNICATION NETWORKS, Bd. 1, Nr. 1, 1. Januar 2008 (2008-01-01), Seiten 57-74, XP055539155, ISSN: 1939-0114, DOI: 10.1002/sec.13
- Cobourne Sheila: "Quantum Key Distribution Protocols and Applications", , 8. März 2011 (2011-03-08), XP055539097, Gefunden im Internet: URL:https://www.ma.rhul.ac.uk/static/techr ep/2011/RHUL-MA-2011-05.pdf [gefunden am 2019-01-08]
- Trong Nghia Le ET AL: "Advanced Metering Infrastructure Based on Smart Meters in Smart Grid" In: "Smart Metering Technology and Services - Inspirations for Energy Utilities", 29. Juni 2016 (2016-06-29), InTech, XP055539180, ISBN: 978-953-51-2452-8 DOI: 10.5772/63631, * Abschnitt 1 und 5.5.2.3 *
- RUIRUI ZHANG ET AL: "Prospects of fiber quantum key distribution technology for power systems", 22. INTERNATIONAL CONFERENCE ON ELECTRICITY DISTRBUTION, 1. Januar 2013 (2013-01-01), Seite 0154, XP055539512, DOI: 10.1049/cp.2013.0586 ISBN: 978-1-84919-732-8

## Beschreibung

Die Anmeldung betrifft ein Schlüsselaustauschsystem, umfassend mindestens eine Schlüsselweiterverteilungsvorrichtung, wobei die Schlüsselweiterverteilungsvorrichtung mindestens ein Empfangsmodul umfasst, eingerichtet zum Empfangen eines Quantenschlüssels über einen ersten optischen Kommunikationskanal, wobei die Schlüsselweiterverteilungsvorrichtung mindestens ein Generierungsmodul umfasst, eingerichtet zum Generieren des empfangenen Quantenschlüssels, und wobei die Schlüsselweiterverteilungsvorrichtung mindestens ein Sendemodul umfasst, eingerichtet zum Senden des generierten Quantenschlüssels über mindestens einen weiteren optischen Kommunikationskanal. Darüber hinaus betrifft die Anmeldung eine Stromverteilnetzvorrichtung und eine Verwendung einer Stromverteilnetzvorrichtung.

Im Kommunikationsbereich ist es ein stetiges Anliegen, die Kommunikation zwischen zwei Entitäten, insbesondere Endgeräten, vor einem Zugriff von unberechtigten Dritten zu schützen. Hierzu kann die Kommunikation insbesondere verschlüsselt durchgeführt werden. Um Daten zu verschlüsseln, kann beispielsweise ein symmetrisches Verschlüsselungsverfahren genutzt werden. In diesem Fall verfügen beispielsweise ein erstes Endgerät und ein weiteres Endgerät über einen gemeinsamen geheimen Schlüssel. Mit diesem Schlüssel können zu sendende Datensätze verschlüsselt und empfangene, verschlüsselte Datensätze entschlüsselt werden.

Für eine ausreichend sichere Kommunikation zwischen zwei Endgeräten müssen insbesondere die nachfolgenden zwei Bedingungen erfüllt sein. Zum einen muss der geheime Schlüssel eine ausreichende Schlüssellänge (z.B. > 256) Bit aufweisen. Zum anderen muss der Austausch des geheimen Schlüssels an die beiden, an der Kommunikation beteiligten Endgeräte in sicherer Weise erfolgen. Wird der Schlüssel beispielsweise während des Austausches bzw. der Übertragung an ein Endgerät von einem unberechtigten dritten Endgerät abgehört, kann das dritte Endgerät unter Nutzung des abgehörten Schlüssels eine mit dem Schlüssel verschlüsselte Kommunikation ausspähen.

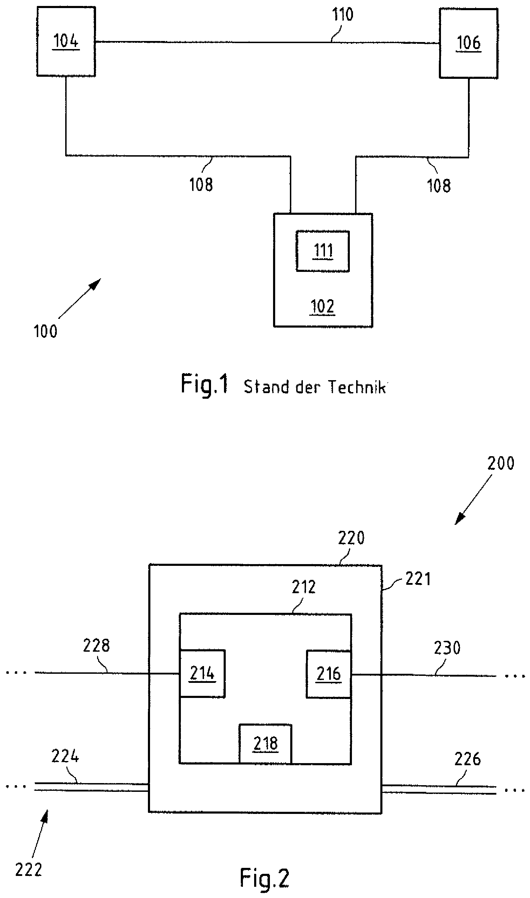

Ein Verfahren, bei dem beide Bedingungen erfüllt werden, ist das sogenannte Quantenschlüsselaustausch-Verfahren (Quantum key distribution (QKD)). Bei einem Quantenschlüsselaustausch-Verfahren werden Eigenschaften der Quantenmechanik genutzt, um einen geheimen Schlüssel in Form einer Zufallszahl mit einer ausreichenden Schlüssellänge zu generieren und den beiden Endgeräten in sicherer und schneller Weise zur Verfügung zu stellen. Ein beispielhaftes Schlüsselaustauschsystem 100 des Standes der Technik ist in Figur 1 dargestellt.

Das Schlüsselaustauschsystem 100 umfasst ein erstes Endgerät 104 und ein zweites Endgerät 106. Das erste und das zweite Endgeräte 110 können über einen Kommunikationskanal 110 Datensätze bzw. Daten miteinander, vorzugsweise bidirektional, austauschen. Beispielsweise kann das erste Endgerät 104 Daten an das zweite Endgeräte 106 senden. Für eine gesicherte Kommunikation verwenden die Endgeräte 104, 106 einen geheimen, gemeinsamen Quantenschlüssel. Dieser kann durch ein bekanntes Quantenschlüsselaustausch-Verfahren an die Endgeräte 104, 106 übertragen werden.

Vorliegend ist eine Schlüsselverteilungsvorrichtung 102 vorgesehen. Die Schlüsselverteilungsvorrichtung 102 umfasst einen Quantenschlüsselgenerator 111 (z.B. entangled Photon Source) eingerichtet zum Generieren eines Quantenschlüssels. Der generierte Quantenschlüssel wird mittels eines optischen Signals, insbesondere mittels Photonen, von der Schlüsselverteilungsvorrichtung 102 über einen optischen Kommunikationskanal 108, beispielsweise ein Glasfaserkabel, an das erste Endgerät 104 und das zweite Endgerät 106 übertragen. Der Vorteil eines Quantenschlüsselaustauschverfahrens besteht insbesondere darin, dass die damit erreichte Sicherheit auf bekannten physikalischen Gesetzmäßigkeiten beruht und nicht auf Annahmen über die Leistungsfähigkeit von Computern und Algorithmen oder über die Verlässlichkeit von Vertrauenspersonen. Die Sicherheit der verschiedenen Verfahren des Quantenschlüsselaustauschs entsteht insbesondere dadurch, dass ein unberechtigter Dritter, der die Quantenschlüsselübertragung auf dem optischen Kommunikationskanal abhört, bemerkt wird. Mit anderen Worten kann durch ein Überprüfungsmodul festgestellt werden, dass die Übertragung des Quantenschlüssels abgehört oder in anderer Weise beeinträchtigt wurde. Stellt insbesondere ein Überprüfungsmodul eines Endgeräts 104, 106 fest, dass die Übertragung belauscht wurde, kann der übertragene Schlüssel verworfen werden (in der Praxis bei Überschreiten eines vorgegebenen Fehler-Toleranzwertes).

Problematisch bei den Stand der Technik Systemen ist jedoch die beschränkte Reichweite. So ist die maximale Länge eines optischen Kommunikationskanals für die Übertragung eines Quantenschlüssels auf ca. 70 bis 100 km beschränkt. Herkömmliche Signalverstärker können aufgrund der erforderlichen Kohärenz des optischen Signals nicht eingesetzt werden.

Vorstellbar ist, dass zur Erhöhung der Reichweite mehrere über jeweils einen optischen Kommunikationskanal verbundene Schlüsselweiterverteilungsvorrichtungen (z.B. Quantum Key Distribution Devices, Quantum Repeater oder Quantum Memory Devices) genutzt werden können. Eine solche Schlüsselweiterverteilungsvorrichtung kann ein Empfangsmodul zum Empfangen des Quantenschlüssels aufweisen. Mittels eines Überprüfungsmoduls kann geprüft werden, ob polarisierte Einzel-Photonen oder verschränkte Photonenpaare bei dem anderen oder bei beiden Teilnehmern angekommen sind und/oder die Übertragung belauscht wurde. Ist dies nicht der Fall, generiert ein Generierungsmodul den empfangenen Quantenschlüssel und bewirkt eine Übertragung des Quantenschlüssels an das Endgerät (oder eine weitere Schlüsselweiterverteilungsvorrichtung). Das Endgerät (oder die weitere Schlüsselweiterverteilungsvorrichtung) kann sodann überprüfen (z.B. mit einem weiteren Überprüfungsmodul), ob während der Übertragung von der ersten Schlüsselweiterverteilungsvorrichtung zu dem Endgerät bzw. der weiteren Schlüsselweiterverteilungsvorrichtung ein Abhörversuch unternommen wurde.

Nachteilig hieran ist jedoch, dass die Schlüsselweiterverteilungsvorrichtung selbst von einem unberechtigten Dritten manipuliert werden kann. Durch eine entsprechende Manipulation kann ein Quantenschlüssel abgehört werden. Daher ist für die Errichtung eines solchen Quantenschlüsselübertragungsnetzes bzw. -systems und Gewährleistung der Sicherheit des Quantenschlüsselübertragungsnetzes ein hoher Aufwand nötig.

Daher liegt der Anmeldung die Aufgabe zugrunde, ein Schlüsselaustauschsystem zur Verfügung zu stellen, bei dem in sicherer und gleichzeitig aufwandsarmer Weise eine höhere Reichweite erzielt wird.

Die Aufgabe wird gemäß einem ersten Aspekt durch ein Schlüsselaustauschsystem gemäß Anspruch 1 gelöst. Das Schlüsselaustauschsystem umfasst mindestens eine Schlüsselweiterverteilungsvorrichtung. Die Schlüsselweiterverteilungsvorrichtung umfasst mindestens ein Empfangsmodul, eingerichtet zum Empfangen eines Quantenschlüssels über einen ersten optischen Kommunikationskanal. Die Schlüsselweiterverteilungsvorrichtung umfasst mindestens ein Generierungsmodul, eingerichtet zum (Re-)Generieren des empfangenen Quantenschlüssels. Die Schlüsselweiterverteilungsvorrichtung umfasst mindestens ein Sendemodul, eingerichtet zum Senden des generierten Quantenschlüssels über mindestens einen weiteren optischen Kommunikationskanal. Die Schlüsselweiterverteilungsvorrichtung ist in einer Stromverteilnetzvorrichtung eines Stromverteilnetzes angeordnet.

Indem im Gegensatz zum Stand der Technik anmeldungsgemäß die bereits vorhandenen Strukturen eines Stromverteilnetzes, zumindest eine Stromverteilnetzvorrichtung eines Stromverteilnetzes, von dem Schlüsselaustauschsystem genutzt wird, ist ein Schlüsselaustauschsystem mit geringen Aufwand installierbar. Insbesondere wird durch die Anordnung der Schlüsselweiterverteilungsvorrichtung in (bzw. an) einer Stromverteilnetzvorrichtung eines Stromverteilnetzes erreicht, dass das Risiko einer unberechtigten Manipulation der Schlüsselweiterverteilungsvorrichtung reduziert wird. In sicherer und gleichzeitig aufwandsarmer Weise wird bei einem Schlüsselaustauschsystem eine höhere Reichweite erzielt.

Das Schlüsselaustauschsystem ist insbesondere ein Quantenschlüsselaustauschsystem, bei dem Quantenschlüssel insbesondere entsprechend einem Quantenschlüsselaustausch-Verfahren (Quantum key distribution (QKD)) generiert und ausgetauscht bzw. verteilt werden können. Zur Erhöhung der Reichweite weist das anmeldungsgemäße Quantenschlüsselaustauschsystem mindestens eine, vorzugsweise eine Mehrzahl, von Schlüsselweiterverteilungsvorrichtung(en) auf.

Eine Schlüsselweiterverteilungsvorrichtung weist mindestens ein Empfangsmodul auf. Das (optische) Empfangsmodul ist insbesondere mit einem ersten optischen Kommunikationskanal verbindbar. Das Empfangsmodul ist eingerichtet, ein optisches Signal umfassend den mindestens einen Quantenschlüssel zu empfangen. Der Quantenschlüssel ist insbesondere eine Zufallszahl mit ausreichender Schlüssellänge (z.B. > 256 Bit). Das optische Signal kann entsprechend dem Quantenschlüssel moduliert sein.

Ferner umfasst die Schlüsselweiterverteilungsvorrichtung mindestens ein Generierungsmodul. Das Generierungsmodul generiert den empfangenen Quantenschlüssel. Dies umfasst insbesondere das Reproduzieren des empfangenen Quantenschlüssels. Dies kann beispielsweise ein Verstärken des Quantenschlüssels umfassen. Das Generierungsmodul kann insbesondere ein Quantum-Repeater Modul oder ein Quantum Memory Modul sein. Das Quantum-Repeater Modul kann einen Quantenspeicher umfassen. Über ein Quanten-Repeater-Protokoll kann durch die Erzeugung von maximal verschränkten Zuständen zwischen benachbarten Stationen, dem sogenannten entanglement swapping (Verschränkungs-Austausch, mit dem Verschränkung über größere Distanzen erzeugt wird) und der Verschränkungsdestillation ein Austausch von Schlüsselinformationen über größere Distanzen erreicht werden.

Der durch das Generierungsmodul generierte (z.B. erzeugte verschränkte Zustand eines Quantensystems (im Fall eines Quantum-Repeater Moduls)) Quantenschlüssel, wie ein Quantenzustand, wird durch mindestens ein Sendemodul ausgesendet. Insbesondere kann das (optische) Sendemodul mit mindestens einem weiteren optischen Kommunikationskanal verbindbar sein. Das Sendemodul ist eingerichtet, den Quantenschlüssel bzw. ein den Quantenschlüssel tragendes optisches Signal in den weiteren optischen Kommunikationskanal einzuspeisen. Beispielsweise kann der Quantenschlüssel an mindestens eine weitere Schlüsselweiterverteilungsvorrichtung und/oder mindestens ein Endgerät übertragen werden.

Der erste optische Kommunikationskanal und/oder der weitere optische Kommunikationskanal kann ein drahtloser optischer Kommunikationskanal (z.B. Freiluftübertragung) oder ein drahtgebundener optischer Kommunikationskanal (z.B. Glasfaserkabel) sein. Es versteht sich, dass ein Empfangsmodul auch durch ein Sende-/Empfangsmodul und ein Sendemodul auch durch ein Sende-/Empfangsmodul gebildet sein kann. Ferner versteht es sich, dass der erste und der weitere optische Kommunikationskanal in einer Ausführungsform zumindest teilweise identisch sein können oder als separate Einrichtungen gebildet sein können.

Die Schlüsselweiterverteilungsvorrichtung kann mindestens eine weitere Komponente umfassen, wie mindestens ein Schlüsselerkennungsmodul und/oder mindestens ein (zuvor beschriebenes) Überprüfungsmodul. Ein Schlüsselerkennungsmodul kann eingerichtet sein, den empfangenen Quantenschlüssel aus dem empfangenen optischen Signal (und beispielsweise dem Schlüsselverteilprotokolldaten, die über den klassischen Kommunikationskanal empfangbar sind) zu extrahieren und/oder zu generieren. Ein Überprüfungsmodul kann zum Überprüfen, ob die Übertragung des Quantenschlüssels über den ersten optischen Kommunikationskanal abgehört oder in anderer Weise (z.B. auch aufgrund eines technischen Fehlers) manipuliert wurde, eingerichtet sein.

Anmeldungsgemäß ist erkannt worden, dass eine derartige Schlüsselweiterverteilungsvorrichtung kostengünstig und mit geringem Aufwand und gleichzeitig in manipulationssicherer Weise positioniert werden kann, wenn sie in einer (ohnehin vorhandenen) Stromverteilnetzvorrichtung angeordnet wird. Insbesondere kann eine Schlüsselweiterverteilungsvorrichtung in der Stromverteilnetzvorrichtung integriert sein. Unter einer Stromverteilnetzvorrichtung ist insbesondere eine Einrichtung zu verstehen, die in einem Stromverteilnetz angeordnet ist, und für den Stromtransport und/oder Stromerzeugung benötigt wird.

Insbesondere weist eine anmeldungsgemäße Stromverteilnetzvorrichtung bereits eine (physische) Schutzeinrichtung auf, um beispielsweise eine Manipulation von elektrischen Komponenten der Stromverteilnetzvorrichtung und/oder ein Verletzungsrisiko (beispielsweise durch Stromschläge) von Nutzern (z.B. qualifizierte Service- und Wartungsnutzern) zu reduzieren (ggf. nach einer Abschaltung durch die Netzsteuerung). Indem die Schlüsselweiterverteilungsvorrichtung in bzw. an einer derartigen Stromverteilnetzvorrichtung angeordnet wird, kann insbesondere die (ohnehin vorgesehene) Schutzeinrichtung als Manipulationsschutz für eine Schlüsselweiterverteilungsvorrichtung genutzt werden. Das Stromverteilnetz bzw. elektrische Verbundnetz kann ein Höchstspannungsnetz, Hochspannungsnetz, Mittelspannungsnetz und/oder Niederspannungsnetz (z.B. Ortsnetz) sein. Das Stromverteilnetz umfasst insbesondere eine Mehrzahl von elektrischen Stromleitungen. Das Stromverteilnetz kann als elektrische Stromleitungen Freileitungen und/oder Erdleitungen umfassen.

Die Schlüsselweiterverteilungsvorrichtung kann insbesondere über einen weiteren kanalgebundenen oder drahtlosen Kommunikationskanal (sogenannter "klassischer Kommunikationskanal") verfügen. Dieser klassische Kommunikationskanal kann zum Austausch von Schlüsselaustauschprotokollinformationen (z.B. Überprüfung, ob Photonen angekommen sind oder abgehört wurden, und zur Schlüsselfestlegung bzw. Erstellung aus den Quanteninformationen zwischen den zwei Parteien eingerichtet sein.

Wie bereits beschrieben wurde, kann als Stromverteilnetzvorrichtung grundsätzlich jede Stromverteilnetzvorrichtung genutzt werden, die eine zuvor beschriebene Schutzeinrichtung umfasst. Gemäß einer ersten Ausführungsform des anmeldungsgemäßen Schlüsselaustauschsystems kann die Stromverteilnetzvorrichtung eine Transformatorstation sein. Unter einer Transformatorstation ist insbesondere auch ein Umspannwerk und/oder eine Ortsnetzstation zu verstehen. Eine Transformatorstation umfasst (als Schutzeinrichtung) insbesondere eine Sicherungs- oder Zaunanlage, ein besonders gesichertes Gebäude oder Gebäudeteil und/oder ein Gehäuse, um elektrische Komponenten, insbesondere mindestens eine Transformatoreinrichtung, zu umschließen. Das Gehäuse ist eingerichtet, eine Manipulation der elektrischen Komponenten zu verhindern. Zudem dient es als Hochspannungsschutz. Es ist erkannt worden, dass das Gehäuse einer Stromverteilnetzvorrichtung (in der Regel) ausreichend Raum für eine Schlüsselweiterverteilungsvorrichtung aufweist. Vorzugsweise kann daher die Schlüsselweiterverteilungsvorrichtung innerhalb des Gehäuses einer Transformatorstation (oder einem Gehäuse einer anderen Stromverteilnetzvorrichtung) angeordnet sein. Zudem ist von Vorteil, dass eine Vielzahl von Transformatorstationen geographisch derart verteilt sein kann, dass sie in einem für die Übertragung eines Quantenschlüssels ausreichend kleinen Abstand zueinander angeordnet sind. Es ist insbesondere erkannt worden, dass eine Transformatorstation häufig an ein optisches Kommunikationsnetz, insbesondere an eine Mehrzahl von optischen Kommunikationskanälen des Kommunikationsnetzes angeschlossen sein kann. Hierdurch kann in einfacher Weise ein Quantenaustauschnetz bzw. -system mit einer großen geographischen Abdeckung bereitgestellt werden, die insbesondere zu der geographischen Abdeckung des (genutzten) Stromverteilnetzes korrespondieren kann.

In einer weiteren Ausführungsform kann das Schlüsselaustauschsystem, insbesondere die Schlüsselerweiterungsvorrichtung, mindestens ein Vervielfältigungsmodul umfassen. Das Vervielfältigungsmodul kann eingerichtet sein, um eine Punkt-zu-Vielpunkt Verbindung (auch Point-to-Multipoint Verbindung genannt) bereitzustellen. Das Vervielfältigungsmodul kann über mindestens eine, insbesondere optische Komponente (z.B. optische Switches, Wavelenghts-Division Multiplexing Devices oder optischer Splitter) verfügen, um an einem Punkt, vorzugsweise in der Schlüsselerweiterungsvorrichtung des Schlüsselaustauschsystems, eine Point-to-Multipoint Verbindung zum Anschluss mehrerer Teilnehmer bereitzustellen. Diese Komponente kann bspw. in einer Transformatorstation oder einem Umspannwerk integriert sein, von der (ohnehin) mehrere optische Kommunikationskanäle (Glasfaserleitungen) zu einer Mehrzahl von Endgeräten laufen.

Wie bereits beschrieben wurde, kann das Vervielfältigungsmodul, insbesondere die Komponenten eines (re-)konfigurierbaren optische Netzwerkes mit dem Daten-, Prozess (oder auch SCADA-Netz) in einer Stromverteilnetzvorrichtung, insbesondere in der Schlüsselerweiterungsvorrichtung (aber auch außerhalb) integriert sein. Ferner kann ein Netzwerkkonfigurations- und Komponentennutzungsoptimierungsmodul in einer Strom-, Daten- und Schlüsselverteilnetz-Steuerung die physische Ressourcenzuteilung für die unterschiedlichen Netzwerkkomponenten und Netzwerke festlegen und insbesondere die Komponenten des optischen Netzwerkes konfigurieren. Eine optimierte Zuteilung dieser Ressourcen kann gemäß der Ist-Anforderungen, Prognosewerte und Service Leveln für Daten-, Prozess- und Schlüsselverteilnetzauslastung durchgeführt werden.

Gemäß einer weiteren bevorzugten Ausführungsform des anmeldungsgemäßen Schlüsselaustauschsystems kann die Stromverteilnetzvorrichtung ein Freileitungsmast sein. Insbesondere kann die Stromverteilnetzvorrichtung ein Hochspannungsfreileitungsmast sein. Der Freileitungsmast kann eine Mastspitze aufweisen. Die Mastspitze kann vorzugsweise die Stromverteilnetzvorrichtung umfassen. Um unberechtigte Nutzer vor Stromschläge zu schützen, ist ein Freileitungsmast nur schwer zugänglich. Für berechtigte Nutzer muss vorher ggf. eine Freischaltung erfolgen. Die Schutzeinrichtung wird bei einem Freileitungsmast insbesondere durch dessen Höhe bereitgestellt. So ist insbesondere die Mastspitze aufgrund Ihrer Höhe gegenüber dem Erdboden für unberechtigte Dritte nicht zugänglich. Neben der reinen Höhe kann ein Freileitungsmast weitere Schutzeinrichtungen aufweisen, die einen Aufstieg, insbesondere in die Mastspitze, für Unberechtigte erschwert. Indem eine Schlüsselweiterverteilungsvorrichtung, insbesondere im Bereich der Mastspitze eines Freileitungsmastes, angeordnet ist, kann die Schlüsselweiterverteilungsvorrichtung besonders manipulationssicher angeordnet werden. Darüber hinaus ist - ähnlich wie bei den zuvor beschriebenen Transformatorstationen - von Vorteil, dass eine Vielzahl von Freileitungsmasten geographisch derart verteilt sein kann, dass sie in einem für die Übertragung eines Quantenschlüssels ausreichend kleinen Abstand zueinander angeordnet sind. Hierdurch kann in einfacher Weise ein Quantenaustauschnetz bzw. -system mit einer großen geographischen Abdeckung bereitgestellt werden, die insbesondere zu der geographischen Abdeckung des (genutzten) Stromverteilnetzes korrespondieren kann.

Vorzugsweise können in einem anmeldungsgemäßen Quantenaustauschsystem als Stromverteilnetzvorrichtungen unterschiedliche Stromverteilnetzvorrichtungen (z.B. Freileitungsmasten und Transformatorstationen) je nach deren Verfügbarkeit genutzt werden.

Ferner ist anmeldungsgemäß erkannt worden, dass ein Stromverteilnetz bereits über mindestens einen optischen Kommunikationskanal verfügen kann. Insbesondere kann bei einem Stromverteilnetz mindestens ein optischer Kommunikationskanal, insbesondere in Form eines optischen Nachrichtenkabels, wie ein Glasfaserkabel, bereits mitverlegt sein. Häufig kann (wie z.B. bei Hochspannungsmasten) ein Bündel von Glasfaserkabeln verlegt sein.

Gemäß einer bevorzugten Ausführungsform wird daher vorgeschlagen, dass mindestens ein optischer Kommunikationskanal durch ein in dem Stromverteilnetz integriertes Glasfaserkabel gebildet werden kann. Insbesondere kann mindestens ein optischer Kommunikationskanal (bei einer Freilandleitung) durch ein in einem Erdseil des Stromverteilnetzes integriertes Glasfaserkabel gebildet sein. Dies bietet insbesondere den Vorteil, dass auf ein bereits bestehendes optisches Nachrichtenverteilnetz bzw. dessen Strukturen bei dem Aufbau eines Quantenschlüsselaustauschverteilnetz bzw. -system zurückgegriffen werden kann. So kann insbesondere eine (ohnehin vorhandene) Stromverteilnetzvorrichtung zur sicheren Anordnung einer Schlüsselweiterverteilungsvorrichtung verwendet werden und als optische(r) Übertragungskanal/kanäle die (ohnehin verlegten) optischen Kommunikationskanäle des Stromverteilnetzes. In besonders aufwandsarmer und kostengünstiger Weise kann ein Quantenschlüsselaustauschverteilnetz bzw. -system aufgebaut und bereitgestellt werden.

Für einen besseren Manipulationsschutz kann gemäß einer weiteren Ausführungsform die Stromverteilnetzvorrichtung mindestens ein (zusätzliches) Detektionsmodul umfassen. Das Detektionsmodul kann zum Detektieren eines unberechtigten Zutritts zu der Stromverteilnetzvorrichtung, insbesondere zu der in der Stromverteilnetzvorrichtung angeordneten Schlüsselweiterverteilungsvorrichtung, eingerichtet sein. Beispielsweise kann ein optisches Detektionsmodul (z.B. mindestens eine Überwachungskamera) vorgesehen sein. Auch kann bei einem Gehäuse mit einer verschließbaren Tür (oder einer ähnlichen Vorrichtung) ein Detektionsmodul vorgesehen sein, welches ein unberechtigtes Öffnen der Tür (oder einem anderen Bereich eines Gehäuses) detektieren kann. Das mindestens eine Detektionsmodul kann mit einer zentralen Überwachungseinrichtung verbunden sein, die bei einer entsprechenden Benachrichtigung Maßnahmen zur Beseitigung der Manipulation ergreifen kann. Eine Manipulation der Schlüsselweiterverteilungsvorrichtung kann hierdurch weiter erschwert werden.

Gemäß einer bevorzugten Ausführungsform kann die Schlüsselweiterverteilungsvorrichtung über ein Stromversorgungsmodul verfügen. Das Stromversorgungsmodul kann eingerichtet sein, die Schlüsselweiterverteilungsvorrichtung mit Strom zu versorgen. Es ist erkannt worden, dass eine Schlüsselweiterverteilungsvorrichtung auch mit Strom versorgt werden muss. Als Stromversorgungsmodul kann beispielsweise eine Transformationseinrichtung vorgesehen sein, um den Strom aus dem Stromnetz auf das von der Schlüsselweiterverteilungsvorrichtung benötigte Spannungsniveau zu transformieren. Alternativ oder zusätzlich kann das Stromversorgungsmodul über eine Photovoltaikanlage, mindestens einen Windgenerator und/oder mindestens eine Batterie verfügen.

Darüber hinaus kann die Schlüsselweiterverteilungsvorrichtung mindestens eine Wartungsschnittstelle und/oder Dienstschnittelle (z.B. für den Austausch von Schlüsselverteilprotokoll-Informationen) umfassen. Vorzugsweise kann die Schlüsselweiterverteilungsvorrichtung mindestens eine Sicherungseinrichtung (z.B. Firewall, Intrusion Detection System, etc.) für eine Absicherung der Kommunikation über die Wartungsschnittstelle und/oder Dienstschnittelle umfassen. Es versteht sich, dass zwei oder mehr Sicherungseinrichtungen vorgesehen sein können. Beispielsweise kann für eine Absicherung als Sicherungseinrichtung auch ein Authentifizierungsverfahren implementiert sein, bei dem beispielsweise eine Nutzerkennung und/oder ein geheimer Code (z.B. Passwort, etc.) überprüft werden kann, bevor die Schnittstelle für eine Kommunikation freigegeben wird. Die Sicherheit kann noch weiter verbessert werden.

Gemäß einer weiteren Ausführungsform kann das Schlüsselaustausystem mindestens eine Schlüsselverteilungsvorrichtung umfassen. Die Schlüsselverteilungsvorrichtung kann beispielsweise in einer zentralen Recheneinrichtung integriert sein und z.B. auf Anforderung einen Quantenschlüssel generieren sowie an mindestens eine bestimmte Zielentität (z.B. ein oder mehrere Endgerät(e)) übertragen. Die zentrale Recheneinheit kann mit einem Netzwerkkonfigurations- und Komponentennutzungsoptimierungsmodul zur Zuordnung der (optischen) Netzressourcen auf Daten-, Prozess- und Schlüsselverteilnetz kombiniert sein und/oder ein Vervielfältigungsmodul für die Steuerung der konfigurieren optischen Netzwerkkomponenten für Point-to-Multipoint Verbindungen umfassen. Die Schlüsselverteilungsvorrichtung kann mindestens einen Quantenschlüsselgenerator umfassen. Der Quantenschlüsselgenerator kann zum Generieren des Quantenschlüssels eingerichtet sein.

Vorzugsweise kann der Quantenschlüsselgenerator einen Zufallsgenerator umfassen, um z.B. nach dem BB84 -Quantenschlüsselverteil-Protokoll einen zufällig erzeugten Schlüssel mit Hilfe der Polarisation von Photonen zu übertragen. Der Zufallsgenerator kann als Quantenschlüssel eine Zufallszahl mit ausreichender Länge (z.B. > 256Bit) generieren, Beispielsweise kann der Zufallsgenerator eine/n Photonengenerator bzw. -quelle, einen semi-transparenten Spiegel und zwei Photonendetektoren umfassen. Die von der Photonenquelle abgegebenen Photonen werden auf den semi-transparenten Spiegel geleitet. Wenn ein Photon (oder eine Gruppe von Photonen) von dem semi-transparenten Spiegel reflektiert wird, trifft dieses auf einen ersten Detektor und wenn ein Photon (oder eine Gruppe von Photonen) von dem semi-transparenten Spiegel durchgelassen wird, trifft dies auf einen zweiten Detektor. Beispielsweise kann jedes Photon (oder eine Gruppe von Photonen), welches von dem ersten Detektor detektiert wird, eine 0 repräsentieren, und jedes Photon(oder eine Gruppe von Photonen), welches von dem zweiten Detektor detektiert wird, eine 1 repräsentieren (oder umgekehrt). Hierdurch basiert die generierte Zufallszahl auf Quantenphänomenen, so dass ein besonders sicherer Schlüssel generiert werden kann. Alternativ zu BB84 können andere Protokolle verwendet werden (z.B. B92).

In einer Ausführungsform kann der Quantenschlüsselgenerator genutzt werden, um mit Hilfe einer verschränkten Photonenpaarquelle (entangled Photon Source) einzelne, verschränkte, polarisiert Photonenpaare zu erzeugen. Ein Zufallsgenerator kann - wie oben beschrieben - zur Erstellung eines zufällig verschränkten Photonenpaares genutzt werden. Die Schlüsselübertragung kann dann beispielsweise auf Basis von Protokollen für Quanten-Verschränkung oder verschränkten BB84-Varianten erfolgen.

Vorzugsweise kann die Schlüsselverteilungsvorrichtung mindestens ein Sendemodul umfassen. Das Sendemodul der Schlüsselverteilungsvorrichtung kann zum Senden des generierten Quantenschlüssels über den ersten optischen Kommunikationskanal an die Schlüsselweiterverteilungsvorrichtung eingerichtet sein. Insbesondere kann ein (optisches) Sendemodul ein optisches Signal umfassend den generierten Quantenschlüssel in einen optischen Kommunikationskanal einspeisen, um eine Übertragung an eine weitere Einrichtung zu bewirken.

Gemäß einer Ausführungsform kann das Empfangsmodul, die Dienstschnittstelle und/oder die Wartungsschnittstelle unterschiedlichen, getrennten Netzwerken bzw. Kommunikationskanälen zugeordnet sein. Die Netzwerke bzw. Kommunikationskanälen können ausgewählt sein aus der Gruppe, umfassend
(1) Schlüsselverteilnetzwerk
(2) Datennetzwerk
(3) Stromverteilsystemsteuerungsnetzwerk.

Ein weiterer Aspekt der Anmeldung ist eine Stromverteilnetzvorrichtung eines Stromverteilnetzes umfassend mindestens eine Schlüsselweiterverteilungsvorrichtung, wobei die Schlüsselweiterverteilungsvorrichtung mindestens ein Empfangsmodul umfasst, eingerichtet zum Empfangen eines Quantenschlüssels über einen ersten optischen Kommunikationskanal, wobei die Schlüsselweiterverteilungsvorrichtung mindestens ein Generierungsmodul umfasst, eingerichtet zum Generieren des empfangenen Quantenschlüssels, und wobei die Schlüsselweiterverteilungsvorrichtung mindestens ein Sendemodul umfasst, eingerichtet zum Senden des generierten Quantenschlüssels über mindestens einen weiteren optischen Kommunikationskanal.

Vorzugsweise kann die Stromverteilnetzvorrichtung eine Transformatorstation oder ein Freileitungsmast sein. Eine anmeldungsgemäße Stromverteilnetzvorrichtung kann insbesondere von einem zuvor beschriebenen (Quanten-)Schlüsselaustauschsystem umfasst sein. Insbesondere kann die Schlüsselweiterverteilungsvorrichtung entsprechend den vorherigen Ausführungen gebildet sein.

Ein noch weiterer Aspekt der vorliegenden Anmeldung ist eine Verwendung einer Stromverteilnetzvorrichtung eines Stromverteilnetzes für die Anordnung einer Schlüsselweiterverteilungsvorrichtung, wobei die Schlüsselweiterverteilungsvorrichtung mindestens ein Empfangsmodul umfasst, eingerichtet zum Empfangen eines Quantenschlüssels über einen optischen Kommunikationskanal, wobei die Schlüsselweiterverteilungsvorrichtung mindestens ein Generierungsmodul umfasst, eingerichtet zum Generieren des empfangenen Quantenschlüssels, und wobei die Schlüsselweiterverteilungsvorrichtung mindestens ein Sendemodul umfasst, eingerichtet zum Senden des generierten Quantenschlüssels über mindestens einen weiteren optischen Kommunikationskanal.

Die zuvor beschriebenen Vorrichtungen und Module können zumindest teilweise durch Software- und/oder zumindest teilweise durch Hardwarekomponenten gebildet sein.

Die Merkmale der Schlüsselaustauschsysteme, Stromverteilnetzvorrichtungen und Verwendungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Schlüsselaustauschsystem, die anmeldungsgemäße Stromverteilnetzvorrichtung und die anmeldungsgemäße Verwendung einer Stromverteilnetzvorrichtung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Schlüsselaustauschsystems gemäß Stand der Technik,
- Fig. 2: eine schematische Ansicht eines Ausführungsbeispiels eines Schlüsselaustauschsystems gemäß der vorliegenden Anmeldung,
- Fig. 3: eine schematische Ansicht eines weiteren Ausführungsbeispiels eines Schlüsselaustauschsystems gemäß der vorliegenden Anmeldung, und
- Fig. 4: eine schematische Ansicht eines Ausführungsbeispiels einer Schlüsselweiterverteilungsvorrichtung gemäß der vorliegenden Anmeldung.

In den Figuren werden für gleiche Elemente gleiche Bezugszeichen verwendet.

Die Figur 2 zeigt eine schematische Ansicht eines Schlüsselaustauschsystems 200 gemäß der vorliegenden Anmeldung, das auf einem (bekannten) Quantenaustauschverfahren basieren kann. Das Schlüsselaustauschsystem 200, insbesondere ein Quantenschlüsselaustauschsystem 200, umfasst mindestens eine Schlüsselweiterverteilungsvorrichtung 212.

Die Schlüsselweiterverteilungsvorrichtung 212 weist mindestens ein (optisches) Empfangsmodul 214 auf. Das Empfangsmodul 214 ist mit einem ersten optischen Kommunikationskanal 228, wie einem drahtlosen optischen Kommunikationskanal oder einen drahtgebundenen optischen Kommunikationskanal (z.B. Glasfaserkabel), verbunden. Das Empfangsmodul 214 ist eingerichtet, einen Quantenschlüssel über den ersten optischen Kommunikationskanal 228 zu empfangen. Der Quantenschlüssel wird insbesondere in Form von Photonen übertragen, die unterschiedlich polarisiert sind. Die unterschiedlichen Polarisierungen können entweder eine 1 oder eine 0 repräsentieren. Durch die unterschiedliche Polarisierung kann als Quantenschlüssel, insbesondere eine entsprechende Zufallszahl mit ausreichender Schlüssellänge, übertragen werden.

Ferner umfasst die dargestellte Schlüsselweiterverteilungsvorrichtung 212 mindestens ein Generierungsmodul 218. Das Generierungsmodul 218 ist insbesondere ein Quantenschlüsselgenerierungsmodul 218. Das Generierungsmodul 218 ist eingerichtet, einen über das Empfangsmodul 214 empfangenen Quantenschlüssel zu (re-)generieren. Hierunter ist insbesondere zu verstehen, dass der empfangene Quantenschlüssel für eine Weiterleitung reproduziert wird und/oder (maximal) verschränkte Zuständen erzeugt und/oder Schlüsselpaare erzeugt werden.

Im Fall der Schlüsselpaare kann die Schlüsselweiterverteilungsvorrichtung jeweils einen Schlüssel, den sie mit jeweils einem der Empfänger (A und B) teilt, erzeugen. Über die Verschlüsselung des Schlüssels von A, Sₐ, mit dem Schlüssel von B, S_{B}, kann über (nicht gezeigte) klassische Kommunikationskanäle, z.B. unter Verwendung des sicheren Vernam-Verfahren (oder auch One Time Pad genannt) der Schlüssel S_{A} von A sicher an B übermittelt werden. Dieser Weg geht auch umgekehrt.

Wie zu erkennen ist, umfasst die Schlüsselweiterverteilungsvorrichtung 212 vorliegend mindestens ein (optisches) Sendemodul 216. Das Sendemodul 216 ist zum Senden des durch das Generierungsmodul 218 generierten bzw. reproduzierten Quantenschlüssels über mindestens einen weiteren optischen Kommunikationskanal 230 eingerichtet. Das Sendemodul 216 ist insbesondere mit dem weiteren optischen Kommunikationskanal 230 verbunden. Der weitere optische Kommunikationskanal 230 kann ein drahtloser optischer Kommunikationskanal oder ein drahtgebundener optischer Kommunikationskanal (z.B. Glasfaserkabel) sein. Im Fall der Nutzung eines drahtlosen optischen Kommunikationskanals (Freiluftübertragung) für einzelne Photonen oder Photonenpaare kann bei dem Sendemodul eine (nicht gezeigte) elektromechanische Targeting-Einheit vorgesehen. Diese elektromechanische Targeting-Einheit kann auf das Empfangsmoduls eines weiteren Empfängers ausgerichtet werden. Gleiches gilt für das Empfangsmodul 214, welches auf ein Sendemodul eines weiteren Teilnehmers ausgerichtet werden kann. Die präzise Ausrichtung von Sende- um Empfangsmodul bei Freiluftübertragung kann durch ein (nicht gezeigtes) Ausrichtungssynchronisationsmodul gesteuert werden. Teilnehmer, die so an das Schlüsselaustauschsystem angeschlossen werden, können stationäre (z.B. Gebäude, andere Strommasten, Rechenzentren, andere Telekommunikationsnetzkomponenten) oder mobile Objekte (z.B. Fahrzeuge, Flugzeuge, Drohnen, Schiffe oder Satelliten) sein.

Es versteht sich, dass ein Empfangsmodul auch durch ein Sende-/Empfangsmodul und ein Sendemodul auch durch ein Sende-/Empfangsmodul gebildet sein kann. Ferner versteht es sich, dass der erste und der weitere optischen Kommunikationskanal in einer Ausführungsform zubindet teilweise identisch sein können.

Anmeldungsgemäß ist vorgesehen, dass die Schlüsselweiterverteilungsvorrichtung 212 in einer Stromverteilnetzvorrichtung 220 eines Stromverteilnetzes 222 angeordnet ist. Das Stromverteilnetz 222 bzw. elektrische Verbundnetz 222 kann ein Höchstspannungsnetz, Hochspannungsnetz, Mittelspannungsnetz und/oder Niederspannungsnetz (z.B. Ortsnetz) sein. Das Stromverteilnetz 222 umfasst elektrische Stromleitungen 224, 226. Insbesondere kann das Stromverteilnetz 222 als elektrische Stromleitungen 224, 226 Freileitungen und/oder Erdkabel umfassen.

Die Stromverteilnetzvorrichtung 220 ist im vorliegenden Ausführungsbeispiel eine Transformatorstation 220 bzw. Umspannstation 220. Eine Transformatorstation 220 kann in herkömmlicher Weise (nicht dargestellte) elektrische Komponenten, wie eine Transformatoreinrichtung, etc., umfassen.

Insbesondere kann die Schlüsselweiterverteilungsvorrichtung 212 in der Stromverteilnetzvorrichtung 220 integriert sein. Im vorliegenden Ausführungsbeispiel weist die Stromverteilnetzvorrichtung 220 ein Gehäuse 221 auf. Das Gehäuse 221 kann beispielsweise über eine (nicht gezeigte) verschließbare Tür (oder eine ähnliche Einrichtung) zugänglich sein. Die Tür kann durch ein optionales Detektionsmodul abgesichert sein. Die Schlüsselweiterverteilungsvorrichtung 212 ist vorliegend innerhalb des Gehäuses 221 angeordnet. Somit wird das Risiko einer Manipulation der Schlüsselweiterverteilungsvorrichtung 212 verringert.

Es versteht sich, dass ein anmeldungsgemäßes Schlüsselaustauschsystem eine Mehrzahl von Schlüsselweiterverteilungsvorrichtungen aufweisen kann, die insbesondere jeweils in einer Stromverteilnetzvorrichtung des Stromverteilnetzes angeordnet sein können. Dies bietet insbesondere den Vorteil, dass auf ein bereits bestehendes Verteilnetz bzw. dessen Strukturen bei dem Aufbau eines Quantenschlüsselaustauschverteilnetzes bzw. -systems zurückgegriffen werden kann. Neben einer Transformatorstation kann eine Schlüsselweiterverteilungsvorrichtung (grundsätzlich) auch in anderen Stromverteilnetzvorrichtungen angeordnet, insbesondere integriert, sein, wie Schalt-, Umspannwerke, ein Freileitungsmast und/oder angeschlossene Erzeuger, wie Windkraftanlagen, Photovoltaikanlagen, Kraftwerke, etc.

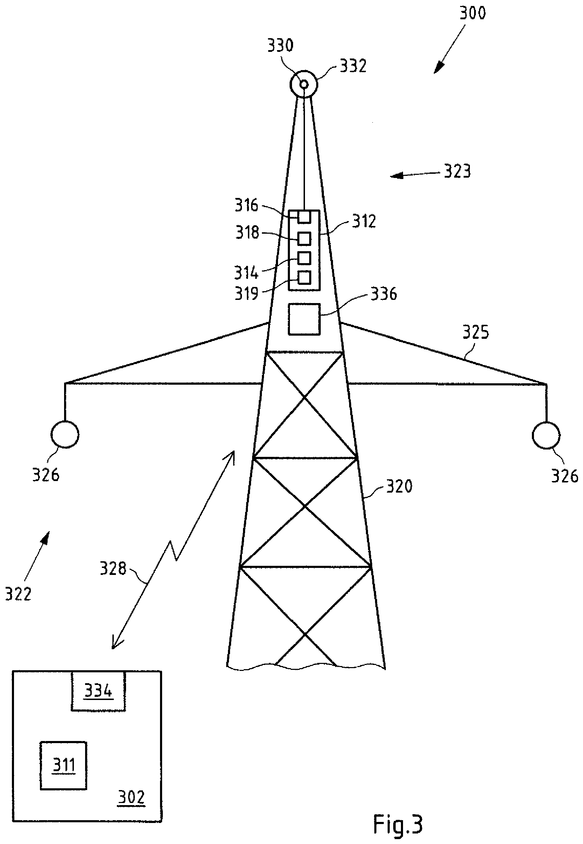

Die Figur 3 zeigt eine schematische Ansicht eines weiteren Ausführungsbeispiels eines Schlüsselaustauschsystems gemäß der vorliegenden Anmeldung. Zur Vermeidung von Wiederholungen werden nachfolgend im Wesentlichen nur die Unterschiede zu dem Ausführungsbeispiel nach Figur 2 beschrieben. Für die anderen Komponenten des Schlüsselaustauschsystems 300 wird insbesondere auf die obigen Ausführungen verwiesen.

Im vorliegenden Ausführungsbeispiel ist die mindestens eine Schlüsselweiterverteilungsvorrichtung 312 in einer Stromverteilnetzvorrichtung 320 eines Stromverteilnetzes 322 in Form eines Freileitungsmastes 320, insbesondere eines Hochspannungsfreileitungsmastes 320, angeordnet. Insbesondere ist die Schlüsselweiterverteilungsvorrichtung 312 in (bzw. an) der Mastspitze 323 des Freileitungsmastes 320 angeordnet. Die Mastspitze 323 ist insbesondere der Bereich des Freileitungsmastes 320, der oberhalb und /oder auf im Wesentlichen gleicher Ebene des von dem Boden aus gesehenen untersten horizontalen Tragarms 325 bzw. Auslegers 325 bis zum oberen Endpunkt des Freileitungsmastes 320 verläuft. Indem die Schlüsselweiterverteilungsvorrichtung 312 in der Mastspitze 323 insbesondere integriert ist, wird die Sicherheit vor Manipulationen bereits erhöht.

Zusätzlich kann optional mindestens ein Detektionsmodul 336 vorgesehen sein. Das Detektionsmodul 336 ist zum Detektieren eines unberechtigten Zutritts zu der Stromverteilnetzvorrichtung 320 (insbesondere zu der Mastspitze 323) eingerichtet. Vorzugsweise kann durch das Detektionsmodul 336 der Zugang zu der in bzw. an der Stromverteilnetzvorrichtung 320 angeordneten Schlüsselweiterverteilungsvorrichtung 312 überwacht werden. Ein beispielhaftes Detektionsmodul kann ein optisches Detektionsmodul (ein oder mehrere Überwachungskameras) umfassen.

Besonders vorteilhaft kann als Schlüsselverteilnetz bzw. als optische Kommunikationskanäle des Austauschschlüsselsystems das optische Kommunikationskanalnetz des Stromverteilnetzes 322 genutzt werden. Insbesondere können bei einem Stromverteilnetz 322 optische Nachrichtenkabel 330, insbesondere Glasfaserkabel, mitverlegt sein. Bei den vorliegenden Freileitungen 326 kann mindestens ein Glasfaserkabel 332 in einer Leitung 332 bzw. einem Seil 332, insbesondere in dem Erdseil 332, integriert sein. Das Glasfaserkabel 330 kann insbesondere den ersten und/oder den weiteren optischen Kommunikationskanal 330 bilden. Im vorliegenden Ausführungsbeispiel bildet das Glasfaserkabel 330 den weiteren optischen Kommunikationskanal 330. Lediglich schematisch ist eine Anbindung der Schlüsselweiterverteilungsvorrichtung 312, insbesondere des Sendemoduls 316, an den weiteren optischen Kommunikationskanal 330 dargestellt. Vorzugsweise kann eine ungenutzte Faser ("dark fiber") des Glasfaserkabels 330 für die Übertragung genutzt werden.

Darüber hinaus ist vorliegend eine Schlüsselverteilungsvorrichtung 302 vorgesehen. Die Schlüsselverteilungsvorrichtung 302 kann beispielsweise durch ein zentrales Rechenzentrum, aber auch durch ein Endgerät, gebildet sein. Die dargestellte Schlüsselverteilungsvorrichtung 302 umfasst mindestens einen Quantenschlüsselgenerator 311. Der Quantenschlüsselgenerator 311 ist zum Generieren von Quantenschlüsseln oder eines (zufälligen) verschränkten Photonenzustandes eingerichtet.

Beispielsweise kann der Quantenschlüsselgenerator einen (nicht gezeigten) Zufallsgenerator umfassen. Der Zufallsgenerator kann als Quantenschlüssel eine Zufallszahl generieren. Beispielsweise kann der Zufallsgenerator einen/eine Photonengenerator bzw. -quelle, einen semi-transparenten Spiegel und zwei Photonendetektoren umfassen. Die von der Photonenquelle abgegebenen Photonen werden auf den semi-transparenten Spiegel geleitet. Wenn ein Photon von dem semi-transparenten Spiegel reflektiert wird, trifft dieses auf einen ersten Detektor und wenn ein Photon von dem semi-transparenten Spiegel durchgelassen wird, trifft es auf einen zweiten Detektor. Beispielsweise kann jedes Photon, welches von dem ersten Detektor detektiert wird, eine 0 repräsentieren und jedes Photon, welches von dem zweiten Detektor detektiert wird, eine 1 repräsentieren (oder umgekehrt). Hierdurch basiert die generierte Zufallszahl auf Quantenphänomenen.

Der generierte Quantenschlüssel kann durch ein Sendemodul 334 in einen ersten optischen Kommunikationskanal (vorliegend ein drahtloser Kommunikationskanal 328) eingespeist werden. Über den ersten optischen Kommunikationskanal 328 wird der generierte Quantenschlüssel an die Schlüsselweiterverteilungsvorrichtung 312, insbesondere das Empfangsmodul 314, übertragen. Wie bereits beschrieben wurde, kann die Schlüsselweiterverteilungsvorrichtung 312 eine Weiterleitung des Quantenschlüssels an mindestens eine (nicht gezeigte) weitere Schlüsselweiterverteilungsvorrichtung 312 und/oder mindestens ein (nicht gezeigtes) Endgerät übertragen. Es versteht sich, dass eine Mehrzahl von (nicht gezeigten) Endgeräten vorgesehen sein kann. Zumindest zwei Endgeräte können dann unter Nutzung des erhaltenen Quantenschlüssels in sicherer Weise kommunizieren (siehe auch Ausführungen zu Figur 1). Es versteht sich, dass Empfangs- und Sendemodul 314, 316 mit einer zuvor beschriebenen Targeting-Einheit für Freiluftübertragung über den Kommunikationskanal 328 ausgestatten sein können.

Darüber hinaus kann die Schlüsselweiterverteilungsvorrichtung 312 über ein Stromversorgungsmodul 319 verfügen. Beispielsweise kann das Stromversorgungsmodul 319 eine Transformatoreinrichtung oder eine Windanlage, eine PV-Anlagen und/oder eine Batterie sein. Schließlich kann die Schlüsselweiterverteilungsvorrichtung 312 vorzugsweise über ein (nicht dargestelltes) Vervielfältigungsmodul, insbesondere mindestens eine optisch konfigurierbare Komponente für eine konfiguriere Zuordnung einer Glasfaser aus einem Bündel von Glasfasern verfügen.

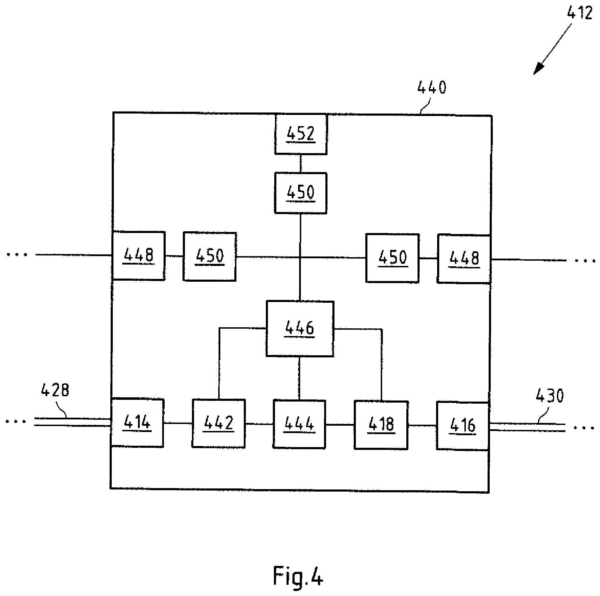

Die Figur 4 zeigt eine schematische Ansicht eines Ausführungsbeispiels einer Schlüsselweiterverteilungsvorrichtung 412. Zur Vermeidung von Wiederholungen werden nachfolgend im Wesentlichen nur die Unterschiede zu den Ausführungsbeispielen nach Figur 2 und 3 beschrieben. Für die anderen Komponenten wird insbesondere auf die obigen Ausführungen verwiesen.

Die dargestellte Schlüsselweiterverteilungsvorrichtung 412 kann insbesondere in einer Stromverteilnetzvorrichtung (z.B. Stromverteilnetzvorrichtung 220 oder 320) angeordnet sein. Neben mindestens einem Empfangsmodul 414, einem Sendemodul 416 und einem Generierungsmodul 418 umfasst die vorliegende Schlüsselweiterverteilungsvorrichtung 412 mindestens ein Schlüsselerkennungsmodul 442 und mindestens ein Überprüfungsmodul 444. In herkömmlicher Weise kann das Schlüsselerkennungsmodul 442 den empfangenen Quantenschlüssel - beispielsweise unter zu Hilfe Name von Quantenschlüsselprotokollinformationen, die über die Dienstschnittstelle 448 eingegangen sind oder an das Generierungsmodul eines anderen Teilnehmers übertragen werden - aus dem empfangenen optischen Signal extrahieren. Ferner kann in herkömmlicher Weise das Überprüfungsmodul 444 überprüfen, ob die Übertragung des Quantenschlüssels über den ersten optischen Kommunikationskanal abgehört oder in anderer Weise (z.B. auch aufgrund eines technischen Fehlers) manipuliert wurde oder die Übertragung gestört war. Wird Entsprechendes festgestellt, kann der Vorgang abgebrochen werden.

In diesem Fall kann beispielsweise ein neuer Quantenschlüssel angefordert werden. Stellt das Überprüfungsmodul 444 fest, dass das übertragene Signal, insbesondere der übertragen Quantenschlüssel, korrekt übertragen wurde (also kein Abhörversuch vorliegt), generiert das Generierungsmodul 418 in oben beschriebener Weise den Quantenschlüssel und bewirkt insbesondere ein Aussenden des Quantenschlüssels durch das Sendemodul 416 über den weiteren optischen Kommunikationskanal 430. Das Generierungsmodul 418 kann Quantenschlüsselprotokolldaten erzeugen, die mit einem Schlüsselerkennungsmodul und einem Schlüsselüberprüfungsmodul eines weiteren Teilnehmers über die Dienstschnittstelle 448 ausgetauscht werden können.

Zur Steuerung der verschiedenen Komponenten kann ein Steuermodul 446 (z.B. ein Mikroprozessor oder dergleichen) vorgesehen sein. In dem Steuerungsmodul446 können bspw. Schlüssel pro Teilnehmer gespeichert werden, die bereits von der Schlüsselverteilungsvorrichtung 415 mit diesem ausgetauscht wurden. Die Schlüssel- und deren Zuordnung und Verteilung (z.B. über klassische Kommunikationskanäle mit Vernam-Verschlüsselung) auf einen anderen Teilnehmer kommen ggf. später zum Einsatz, wenn diese benötigt werden.
Wie zu erkennen ist, umfasst die dargestellte Schlüsselweiterverteilungsvorrichtung 412 weitere Schnittstellen 448, 452. Insbesondere sind vorliegend zwei Dienstschnittstellen bzw. Service-Schnittstellen für eine Kommunikation von Diensten (und/oder den Austausch von Daten für Quantenschlüsselaustauschprotokolle über einen klassischen Kommunikationskanal) und eine Wartungsschnittstelle 452 für eine Wartung der Schlüsselweiterverteilungsvorrichtung 412 vorgesehen. Vorzugsweise jede Schnittstelle 448, 452 ist durch eine Sicherungseinrichtung 450 (z.B. Firewall, Intrusion Detection System und/oder dergleichen) abgesichert. Hierdurch kann die Gefahr einer unberechtigten Manipulation der Komponenten (z.B. 418, 442, 444, 446) zumindest reduziert werden.

Die Dienstschnittstelle 448 ist insbesondere eingerichtet, eine von dem Überprüfungsmodul 444 detektierte fehlerhafte Übertragung (z.B. ein Abhörversuch oder nicht erfasste Photonen) an die (nicht dargestellte) zentrale Überwachungseinrichtung zu übertragen und/oder die benötigten Informationen gemäß der Quantenschlüsselaustauschprotokolle zu übertragen, um einen oder mehrere Schüssel zu generieren. Auch kann eine erfolgreiche Übertragung eines Quantenschlüssels übertragen werden. Die Wartungsschnittstelle 452 ermöglicht insbesondere die Durchführung von (Software-) Aktualisierungen oder Änderungen der Konfiguration. Zudem kann die Funktionsfähigkeit einer Schlüsselweiterverteilungsvorrichtung 412 hierüber überwacht werden.

Die Schlüsselweiterverteilungsvorrichtung 412 kann insbesondere über ein Gehäuse 440 als weitere Schutzmaßnahme vor einem unberechtigten Zugriff umfassen.

Eine weitere besonders bevorzugte Ausführung der Anmeldung umfasst allgemein die Zuordnung von physikalisch getrennten Kommunikationssystemen zum Empfangsmodul 414, zur Dienstschnittstelle 448 und/oder zur Wartungsschnittstelle 452.

Aus dem Stand der Technik ist bekannt, dass Kommunikationssysteme in Stromverteilnetzen verschiedenen Nutzungszwecken unterliegen und aufgrund von Cyber-Security Überlegungen für den Betrieb kritischer Infrastrukturen häufig physikalisch getrennt sind. Damit ist insbesondere gemeint, dass häufig zwei physikalisch getrennte Netzwerke parallel betrieben werden. Ein Netzwerk beispielsweise zur Steuerung der technischen Systeme - im Folgenden Stromverteilsystemsteuerungsnetzwerk genannt - im Stromverteilnetz (oder häufig auch als SCADA- oder Prozessnetzwerk bezeichnet) und ein oder mehrere physikalisch getrennte Netzwerke für kommerzielle Datenkommunikationsnetzwerke (z.B. Office-Netzwerk, Unternehmensdatennetze, TK-Leistungen für Drittkunden).

Diese physikalische Trennung wird zumeist dadurch umgesetzt, dass das Stromverteilsystemsteuerungsnetzwerk auf Basis von eigens für diesen Zweck installierten Telekommunikationsnetzwerkkomponenten betrieben wird. Alle anderen (kommerziellen) Datenkommunikationsnetzwerke können beispielsweise auf physikalisch getrennten Bitübertragungsschichten (OSI Layer 1 - z.B. eigene Glasfaserkabeln oder getrennte Wellenlängenbereichen bei Wavelength Division Multiplex (WDM oder DWDM) Kanälen auf einem Glasfaserkabel oder eigene metallische drahtgebundene Kommunikationskabel oder verschiedene Frequenzbereiche bei drahtlosen Kommunikationsvorrichtungen) umgesetzt werden. Im Weiteren werden die folgenden Ebenen der Kommunikationsnetzwerke häufig physikalisch getrennt (OSI Layer 2 bis 7). Durch diese Maßnahmen kann vermieden werden, dass ein Angreifer mit Zugriff zu einem (kommerziellen) Datenkommunikationsnetzwerk die Möglichkeit hat, Zugang zu einem Stromverteilsystemsteuerungsnetzwerk zu bekommen und die darin enthaltenen Komponenten eines Stromnetzes zu manipulieren.

Gemäß dieser bevorzugten Ausführungsform kann das Empfangsmodul 414, die Dienstschnittstelle 448 und/oder die Wartungsschnittstelle 452 unterschiedlichen, getrennten Netzwerken bzw. Kommunikationskanälen zugeordnet sein. Die Netzwerke bzw. Kommunikationskanälen können ausgewählt sein aus der Gruppe, umfassend
(1) Schlüsselverteilnetzwerk
(2) Datennetzwerk
(3) Stromverteilsystemsteuerungsnetzwerk.

Dies kann anmeldungsgemäß insbesondere durch die Nutzung der Kommunikationskanäle des Stromverteilsystemsteuerungsnetzwerk für die Wartungsschnittstelle 452 und anderer, physikalisch getrennter Kommunikationskanäle (des Datennetzwerkes) für die Dienstschnittstelle 448 erreicht werden. Damit profitiert die Kommunikation mit der Wartungsschnittstelle von den besonderen Maßnahmen der Stromnetzbetreiber zum Schutz der Steuerung des Stromverteilsystems gegen den Angriff von Dritten. Dies ist insbesondere wichtig, wenn die Betreiber des Stromnetzes und des Schlüsselaustauschsystem identisch sind.

Es ist in einer weiteren Ausführungsform auch vorstellbar, dass aufgrund von besonderen Sicherheitsanforderungen für die Wartungsschnittstelle 452 ein weiteres (physikalisch) getrenntes Schlüsselverteilsystemwartungsnetzwerk genutzt wird, das auf der Bitübertragungsschicht sowohl von Stromverteilsystemsteuerungsnetzwerk als auch Datennetzwerk physikalisch getrennt ist (z.B. mit eigenem Glasfaserkabel, eigenem WDM Frequenzbereichen auf einem geteilten Glasfaserkabel oder eigenem metallischen drahtgebundenen Kabel).

Die Dienstschnittstelle 448 kann entweder an Glasfaserkabel des Datennetzwerkes oder eines (weiteren) drahtlosen Kommunikationsnetzwerkes angebunden sein. Anmeldungsgemäß kann dieses Netzwerk vom Anschluss der Wartungsschnittstelle (physikalisch) getrennt sein.

In einer bevorzugten Ausführungsform kann das Empfangsmodul 414 den Anschluss an einen Kommunikationskanal eines (ungenutzten, also unbeleuchteten) Glasfaserkabels des Datennetzwerkes oder alternativ des Stromverteilsystemsteuerungsnetzwerk oder eines weiteren (dritten) physikalisch getrennten Schlüsselwerteilnetzwerkes erhalten.

Das Empfangsmodul 414 kann sich auch einen Kommunikationskanal (Glasfaserkabel) des Stromverteilsystemsteuerungsnetzwerk oder des Datennetzwerkes oder eines anderen Netzwerkes für die Quantenbitübertragung teilen. Es ist auch vorstellbar, dass Empfangsmodul 414 und Wartungsschnittstelle 452 auf einem Kommunikationskanal (Glasfaserkabel) des Stromverteilsystemsteuerungsnetzwerks betrieben werden. Dadurch wird möglicherweise die praktische Übertragungsdistanz zwischen Komponenten des Schüsselverteilsystems reduziert.

Die Schlüsselverteilungsvorrichtung 412 kann in diesem Fall auch Daten des Stromverteilsystemsteuerungsnetzwerk oder des Datennetzwerkes oder eines anderen Netzwerkes weiter leiten. Das Empfangsmodul kann dazu Frequenzen eines DWM Frequenzbereiches zur Schlüsselübertragung von anderen DWM Frequenzen zur Datenübertragung abteilen. Daten zur Datenübertragung können dann direkt - hier in Figur 4 nicht dargestellt - optisch oder elektronisch an das Sendemodul 416 weiter gegeben werden.

Die Kombination weiterer Ausführungsformen ist möglich. Die hier beschriebenen Ausführungen gelten entsprechend gleichermaßen für das Sendemodul 416 wie für das Empfangsmodul 414.

Für die Ausführung dieser Anmeldung kann der Kommunikationskanal 354 in Figur 3 zwei oder mehrerer Kommunikationskanäle enthalten.

## Patentansprüche

1. Schlüsselaustauschsystem (200, 300), umfassend:
- mindestens eine Schlüsselweiterverteilungsvorrichtung (212, 312, 412),
- wobei die Schlüsselweiterverteilungsvorrichtung (212, 312, 412) mindestens ein Empfangsmodul (214, 314, 414) umfasst, eingerichtet zum Empfangen eines Quantenschlüssels über einen ersten optischen Kommunikationskanal (228, 328, 428),
- wobei die Schlüsselweiterverteilungsvorrichtung (212, 312, 412) mindestens ein Generierungsmodul (218, 318, 418) umfasst, eingerichtet zum Generieren des empfangenen Quantenschlüssels, und
- wobei die Schlüsselweiterverteilungsvorrichtung (212, 312, 412) mindestens ein Sendemodul (216, 316, 416) umfasst, eingerichtet zum Senden des generierten Quantenschlüssels über mindestens einen weiteren optischen Kommunikationskanal (230, 330, 430),
**dadurch gekennzeichnet, dass**
- die Schlüsselweiterverteilungsvorrichtung (212, 312, 412) in einer Stromverteilnetzvorrichtung (220, 320) eines Stromverteilnetzes (222, 322) angeordnet ist,
- wobei die Stromverteilnetzvorrichtung (220, 320) eine Transformatorstation (220) ist, umfassend ein Gehäuse zum Umschließen einer Transformatoreinrichtung, wobei die Schlüsselweiterverteilungsvorrichtung (212, 312, 412) innerhalb des Gehäuses der Transformatorstation angeordnet ist, oder
- wobei die Stromverteilnetzvorrichtung (220, 320) ein Freileitungsmast (320) mit einer Mastspitze (323) ist und die Mastspitze (323) die Stromverteilnetzvorrichtung (212, 312, 412) umfasst.

2. Schlüsselaustauschsystem (200, 300) nach Anspruch 1, **dadurch gekennzeichnet, dass**
- die Stromverteilnetzvorrichtung (220, 320) ein Hochspannungsfreileitungsmast (320) ist.

3. Schlüsselaustauschsystem (200, 300) nach einem der vorherigen Ansprüche,
**dadurch gekennzeichnet, dass** mindestens ein optischer Kommunikationskanal (228, 230, 328, 330, 428, 430) durch ein in dem Stromverteilnetz (222, 322) integriertes Glasfaserkabel (228, 230, 328, 330, 428, 430), insbesondere durch ein in einem Erdseil (332) des Stromverteilnetz (222, 322) integriertes Glasfaserkabel (330), gebildet ist.

4. Schlüsselaustausystem (200, 300) nach einem der vorherigen Ansprüche,
**dadurch gekennzeichnet, dass** die Stromverteilnetzvorrichtung (220, 320) mindestens ein Detektionsmodul (336) umfasst, eingerichtet zum Detektieren eines unberechtigten Zutritts zu der Stromverteilnetzvorrichtung (220, 320), insbesondere zu der in der Stromverteilnetzvorrichtung (220, 320) angeordneten Schlüsselweiterverteilungsvorrichtung (212, 312, 412).

5. Schlüsselaustausystem (200, 300) nach einem der vorherigen Ansprüche,
**dadurch gekennzeichnet, dass**
- die Schlüsselweiterverteilungsvorrichtung (212, 312, 412) mindestens eine Wartungsschnittstelle (452) und/oder Dienstschnittelle (448) umfasst, und
- die Schlüsselweiterverteilungsvorrichtung (212, 312, 412) mindestens eine Sicherungseinrichtung (450) für eine Absicherung einer Kommunikation über die Wartungsschnittstelle (452) und/oder Dienstschnittelle (448) umfasst.

6. Schlüsselaustausystem (200, 300) nach einem der vorherigen Ansprüche,
**dadurch gekennzeichnet, dass**
- das Schlüsselaustausystem (200, 300) mindestens eine Schlüsselverteilungsvorrichtung (302) umfasst,
- wobei die Schlüsselverteilungsvorrichtung (302) mindestens einen Quantenschlüsselgenerator (311) umfasst, eingerichtet zum Generieren des Quantenschlüssels.

7. Schlüsselaustausystem (200, 300) nach Anspruch 6, **dadurch gekennzeichnet, dass** die Schlüsselverteilungsvorrichtung (302) mindestens ein Sendemodul (334) umfasst, eingerichtet zum Senden des generierten Quantenschlüssels über den ersten optischen Kommunikationskanal (228, 328, 428) an die Schlüsselweiterverteilungsvorrichtung (212, 312, 412).

8. Stromverteilnetzvorrichtung (220, 320) eines Stromverteilnetzes (222, 322) in Form einer Transformatorstation, wobei die Transformatorstation ein Gehäuse zum Umschließen einer Transformatoreinrichtung umfasst, wobei eine Schlüsselweiterverteilungsvorrichtung (212, 312, 412) innerhalb des Gehäuses der Transformatorstation angeordnet ist, oder eines Freileitungsmasts (320) mit einer Mastspitze (323), umfassend:
- mindestens eine Schlüsselweiterverteilungsvorrichtung (212, 312, 412),
- wobei die Schlüsselweiterverteilungsvorrichtung (212, 312, 412) mindestens ein Empfangsmodul (214, 314, 414) umfasst, eingerichtet zum Empfangen eines Quantenschlüssels über einen ersten optischen Kommunikationskanal (228, 328, 428),
- wobei die Schlüsselweiterverteilungsvorrichtung (212, 312, 412) mindestens ein Generierungsmodul (218, 318, 418) umfasst, eingerichtet zum Generieren des empfangenen Quantenschlüssels, und
- wobei die Schlüsselweiterverteilungsvorrichtung (212, 312, 412) mindestens ein Sendemodul (216, 316, 416) umfasst, eingerichtet zum Senden des generierten Quantenschlüssels über mindestens einen weiteren optischen Kommunikationskanal (230, 330, 430).

9. Verwendung einer Stromverteilnetzvorrichtung (220, 330) eines Stromverteilnetzes (222, 322) in Form einer Transformatorstation, wobei die Transformatorstation ein Gehäuse zum Umschließen einer Transformatoreinrichtung umfasst, wobei eine Schlüsselweiterverteilungsvorrichtung (212, 312, 412) innerhalb des Gehäuses der Transformatorstation angeordnet ist, oder eines Freileitungsmasts (320) mit einer Mastspitze (323) für die Anordnung einer Schlüsselweiterverteilungsvorrichtung (212, 312, 412), wobei die Schlüsselweiterverteilungsvorrichtung (212, 312, 412) mindestens ein Empfangsmodul (218, 318, 418) umfasst, eingerichtet zum Empfangen eines Quantenschlüssels über einen optischen Kommunikationskanal (228, 328, 428), mindestens ein Generierungsmodul (218, 318, 418) umfasst, eingerichtet zum Generieren des empfangenen Quantenschlüssels, und mindestens ein Sendemodul (216, 316, 416) umfasst, eingerichtet zum Senden des generierten Quantenschlüssels über mindestens einen weiteren optischen Kommunikationskanal (230, 330, 430).

## Claims

1. Key exchange system (200, 300), comprising:
- at least one key forwarding distribution device (212, 312, 412),
- wherein the key forwarding distribution device (212, 312, 412) comprises at least one receiving module (214, 314, 414) configured to receive a quantum key via a first optical communication channel (228, 328, 428),
- wherein the key forwarding distribution device (212, 312, 412) comprises at least one generating module (218, 318, 418) configured to generate the received quantum key, and
- wherein the key forwarding distribution device (212, 312, 412) comprises at least one transmitting module (216, 316, 416) configured to transmit the generated quantum key via at least one further optical communication channel (230, 330, 430),
**characterized in that**
- the key forwarding distribution device (212, 312, 412) is arranged in a power distribution network device (220, 320) of a power distribution network (222, 322),
- wherein the power distribution network device (220, 320) is a transformer station (220) comprising a housing for enclosing a transformer unit, wherein the key further distribution device (212, 312, 412) is arranged within the housing of the transformer station,
or
- wherein the power distribution network device (220, 320) is an overhead power line tower (320) having a tower tip (323), and the tower tip (323) comprises the power distribution network device (212, 312, 412).

2. Key exchange system (200, 300) according to claim 1, **characterized in that**
- the power distribution network device (220, 320) is a high voltage overhead line tower (320).

3. Key exchange system (200, 300) according to any one of the preceding claims,
**characterized in that** at least one optical communication channel (228, 230, 328, 330, 428, 430) is formed by a fiber optic cable (228, 230, 328, 330, 428, 430) integrated in the power distribution network (222, 322), in particular, by a fiber optic cable (330) integrated in a ground cable (332) of the power distribution network (222, 322).

4. Key exchange system (200, 300) according to any one of the preceding claims,
**characterized in that** the power distribution network device (220, 320) comprises at least one detecting module (336) configured to detect an unauthorized access to the power distribution network device (220, 320), in particular, to the key forwarding distribution device (212, 312, 412) arranged in the power distribution network device (220, 320).

5. Key exchange system (200, 300) according to any one of the preceding claims,
**characterized in that**
- the key forwarding distribution device (212, 312, 412) comprises at least one maintenance interface (452) and/or service interface (448), and
- the key forwarding distribution device (212, 312, 412) comprises at least one security unit (450) for securing a communication via the maintenance interface (452) and/or service interface (448).

6. Key exchange system (200, 300) according to one of the previous claims,
**characterized in that**
- the key exchange system (200, 300) comprises at least one key distribution device (302),
- wherein the key distribution device (302) comprises at least one quantum key generator (311) configured to generate the quantum key.

7. Key exchange system (200, 300) according to claim 6, **characterized in that** the key distribution device (302) comprises at least one transmitting module (334) configured to transmit the generated quantum key via the first optical communication channel (228, 328, 428) to the key forwarding distribution device (212, 312, 412).

8. Power distribution network device (220, 320) of a power distribution network (222, 322) in the form of a transformer station, the transformer station comprising a housing for enclosing a transformer unit, wherein a key forwarding distribution device (212, 312, 412) is arranged within the housing of the transformer station, or of an overhead line tower (320) having a tower tip (323), comprising:
- at least one key forwarding distribution device (212, 312, 412),
- wherein the key forwarding distribution device (212, 312, 412) comprises at least one receiving module (214, 314, 414) configured to receive a quantum key via a first optical communication channel (228, 328, 428),
- wherein the key forwarding distribution device (212, 312, 412) comprises at least one generating module (218, 318, 418) configured to generate the received quantum key, and
- wherein the key forwarding distribution device (212, 312, 412) comprises at least one transmitting module (216, 316, 416) configured to transmit the generated quantum key via at least one further optical communication channel (230, 330, 430).

9. Use of a power distribution network device (220, 330) of a power distribution network (222, 322) in the form of a transformer station, the transformer station comprising a housing for enclosing a transformer unit, wherein a key forwarding distribution device (212, 312, 412) is arranged within the housing of the transformer station, or of an overhead line tower (320) having a tower tip (323) for the arrangement of a key forwarding distribution device (212, 312, 412), wherein the key forwarding distribution device (212, 312, 412) comprises at least one receiving module (218, 318, 418) configured to receive a quantum key via an optical communication channel (228, 328, 428), at least one generating module (218, 318, 418) configured to generate the received quantum key, and at least one transmitting module (216, 316, 416) configured to transmit the generated quantum key via at least one further optical communication channel (230, 330, 430).

## Revendications

1. Système d'échange de clé (200, 300) comprenant:
- au moins un dispositif de distribution de clé (212, 312, 412),
- où le dispositif de distribution de clé (212, 312, 412) comprend au moins un module de réception (214, 314, 414) configuré pour recevoir une clé quantique par un premier canal de communication optique (228, 328, 428),
- où le dispositif de distribution de clé (212, 312, 412) comprend au moins un module de génération (218, 318, 418) configuré pour générer la clé quantique reçue, et
- où le dispositif de distribution de clé (212, 312, 412) comprend au moins un module de transmission (216, 316, 416) configuré pour transmettre la clé quantique générée par au moins un canal de communication optique supplémentaire (230, 330, 430),
**caractérisé en ce que**
- le dispositif de distribution de clé (212, 312, 412) est disposé dans un dispositif de réseau de distribution d'électricité (220, 320) d'un réseau de distribution d'électricité (222, 322),
- où le dispositif de réseau de distribution d'électricité (220, 320) est un poste de transformation (220) comprenant un boîtier pour envelopper un dispositif de transformation, le dispositif de distribution supplémentaire de clé (212, 312, 412) étant disposé dans le boîtier du poste de transformation,
ou bien
- où le dispositif de réseau de distribution d'électricité (220, 320) est un mât de ligne aérienne (320) avec un sommet de mât (323), et le sommet de mât (323) comprend le dispositif de réseau de distribution d'électricité (212, 312, 412).

2. Système d'échange de clé (200, 300) selon la revendication 1, **caractérisé en ce que**
- le dispositif du réseau de distribution d'électricité (220, 320) est un mât de ligne aérienne à haute tension (320).

3. Système d'échange de clé (200, 300) selon l'une quelconque des revendications précédentes, **caractérisé en ce qu'**au moins un canal de communication optique (228, 230, 328, 330, 428, 430) est formé par un câble à fibre optique (228, 230, 328, 330, 428, 430) intégré dans le réseau de distribution d'électricité (222, 322), en particulier par un câble à fibre optique (330) intégré dans un câble de masse (332) du réseau de distribution d'électricité (222, 322).

4. Système d'échange de clé (200, 300) selon l'une quelconque des revendications précédentes, **caractérisé en ce que** le dispositif de réseau de distribution d'électricité (220, 320) comprend au moins un module de détection (336) configuré pour détecter un accès non autorisé au dispositif de réseau de distribution d'électricité (220, 320), en particulier au dispositif de distribution de clé (212, 312, 412) disposé dans le dispositif de réseau de distribution d'électricité (220, 320).

5. Système d'échange de clé (200, 300) selon l'une quelconque des revendications précédentes, **caractérisé en ce que**
- le dispositif de distribution de clé (212, 312, 412) comprend au moins une interface de maintenance (452) et/ou une interface de service (448), et
- le dispositif de distribution de clé (212, 312, 412) comprend au moins un dispositif de sécurité (450) pour garantir une communication via l'interface de maintenance (452) et/ou l'interface de service (448).

6. Système d'échange de clé (200, 300) selon l'une quelconque des revendications précédentes, **caractérisé en ce que**
- le système d'échange de clé (200, 300) comprend au moins un dispositif de distribution de clé (302),
- dans lequel le dispositif de distribution de clé (302) comprend au moins un générateur de clé quantique (311) configuré pour générer la clé quantique.

7. Système d'échange de clé (200, 300) selon la revendication 6, **caractérisé en ce que** le dispositif de distribution de clé (302) comprend au moins un module de transmission (334), configuré pour transmettre la clé quantique générée par le premier canal de communication optique (228, 328, 428) au dispositif de distribution de clé (212, 312, 412).

8. Dispositif de réseau de distribution d'électricité (220, 320) d'un réseau de distribution d'électricité (222, 322) sous la forme d'un poste de transformation, où le poste de transformation comprend un boîtier pour envelopper un dispositif de transformation, où un dispositif de distribution de clé (212, 312, 412) est disposé dans le boîtier du poste de transformation, ou d'un mât de ligne aérienne (320) ayant un sommet de mât (323), comprenant :
- au moins un dispositif de distribution de clé (212, 312, 412),
- où le dispositif de distribution de clé (212, 312, 412) comprend au moins un module de réception (214, 314, 414) configuré pour recevoir une clé quantique par un premier canal de communication optique (228, 328, 428),
- où le dispositif de distribution de clé (212, 312, 412) comprend au moins un module de génération (218, 318, 418) configuré pour générer la clé quantique reçue, et
- où le dispositif de distribution de clé (212, 312, 412) comprend au moins un module de transmission (216, 316, 416) configuré pour transmettre la clé quantique générée par au moins un canal de communication optique supplémentaire (230, 330, 430).

9. Utilisation d'un dispositif de réseau de distribution d'électricité (220, 330) d'un réseau de distribution d'électricité (222, 322) sous la forme d'un poste de transformation, où le poste de transformation comprend un boîtier pour envelopper un dispositif de transformation, où un dispositif de distribution de clé (212, 312, 412) est disposé à l'intérieur du boîtier du poste de transformation, ou d'un mât de ligne aérienne (320) ayant un sommet de mât (323) pour la disposition d'un dispositif de distribution de clé (212, 312, 412), où le dispositif de distribution de clé (212, 312, 412) comprend au moins un module de réception (218, 318, 418) adapté pour recevoir une clé quantique par un canal de communication optique (228, 328, 428), au moins un module de génération (218, 318), 418) configuré pour générer la clé quantique reçue, et au moins un module de transmission (216, 316, 416) configuré pour transmettre la clé quantique générée par au moins un canal de communication optique supplémentaire (230, 330, 430).
